# EUROPEAN PATENT SPECIFICATION

(11) **EP 4 010 133 B1**
(45) Date of publication and mention of the grant of the patent: **11.10.2023**
(21) Application number: 20767874.9
(22) Date of filing: 07.08.2020
(51) Int. Cl.: B21D 5/02, G01L 1/24

(54) **A TOOL FOR A BENDING PRESS AND AN APPARATUS FOR MONITORING THE STRESS EXERTED BY SAID TOOL**
WERKZEUG FÜR EINE BIEGEPRESSE UND VORRICHTUNG ZUR ÜBERWACHUNG DER VON DIESEM WERKZEUG AUSGEÜBTEN SPANNUNG
OUTIL POUR PRESSE À CINTRER ET APPAREIL POUR SURVEILLER LA CONTRAINTE EXERCÉE PAR LEDIT OUTIL

(30) Priority: 09.08.2019 IT 201900014481
(43) Date of publication of application: 15.06.2022
(73) Proprietor: Rolleri S.p.A, 29020 Vigolzone (PC) (IT)
(72) Inventor: ARGELLATI, Luca, 29020 Vigolzone (PC) (IT); FERRARIO, Maddalena, 29020 Vigolzone (PC) (IT); BRUNERO, Marco, 29020 Vigolzone (PC) (IT)
(74) Representative: Fisauli, Beatrice A. M.
(86) International application number: PCT/IB2020/057477
(87) International publication number: WO 2021/028804

(56) References cited:
- EP-A1- 1 600 256
- WO-A1-2016/037208
- US-A1- 2007 107 529

## Description

The present invention concerns a tool for a press brake and a device, which comprises one or more of said tools, configured to monitor the stress (force, thrust) that they exert on a metal sheet during bending. The invention also concerns a press brake equipped with this device.

In the machine tool sector, press brakes configured to bend metal sheets, plates or the like by means of cold forming are well known.

Press brakes generally consist of a lower base that defines a fixed abutment on which the metal sheet is placed, which carries a bending die with a profile according to which said metal sheet is bent.

An upper cross beam is supported in a manner movable toward and away from the base, along a substantially vertical plane. The cross beam carries integral therewith bending tools, known as punches, adapted to coact with the die to give the metal sheet the desired shape.

The movement of the upper beam is produced by actuator means, typically hydraulic, which provide the force required for the forming operation.

In the idle position, the punch is spaced from the die to allow a metal sheet to be bent to be inserted between the punch and the die. In the working position, the lower end of the punch is carried toward the seat of the die, so as to press the metal sheet arranged between the two aforesaid elements, bending it.

As a function of the type of process to be carried out said tool can be single, i.e. with a monolithic body that extends for the whole, or a part, of the length of the cross beam, or divided, i.e., consist of several multiples placed side by side in the direction of extension of the cross beam.

For this reason, in general, the upper beam is equipped with one or more blocking devices (known as "intermediates") that constrain the punches to make them integral with the cross beam to allow pressing.

In bending operations the working force, i.e., the thrust/load that the actuators must exert to allow correct bending of the metal sheet, is calculated as a function of the length of the section of metal sheet to be bent, of its thickness and of the material of which it is made.

In fact, these parameters allow determination of a bending force value that is sufficient to complete bending but not sufficient to damage the metal sheet and/or the tooling.

Usually, the seat of the die in which the metal sheet to be bent is received and the working part of the punches have a profile with a uniform section that extends along the direction of the bend line. Therefore, ideally the force that the punch exerts on the surface of the metal sheet is distributed equally along the whole of the length of the bend line.

However, in practice for various reasons the force exerted by said tools might not be uniform, i.e. greater is some areas of the metal sheet with respect to others. When this variability is very marked, it can produce aesthetic or functional defects in the bent metal sheet.

This can occur, for example, when the actuators of the press are not perfectly regulated, or the tools have geometric tolerances that are too high or in the case in which said tools are not accurately mounted.

Currently, the working parameters monitored and controllable in prior art machines are movement of the cross beam and the thrust of the various actuators and optionally, on the most up-to-date models, bending angle of the metal sheet.

However, these parameters are not sufficient to ensure the application of a uniform bending force or to detect whether there is an anomaly from this point of view.

In some cases, when said bending force is too high, the metal sheet, but also the tools or even the press itself, can sustain damages.

In fact, in the case in which a thrust value higher than the rated value is set in the monitoring system of the machine, when the punch reaches its end of the stroke bringing the metal sheet into contact with the bottom of the die, the force applied generates pressure that is too high between the surface of the metal sheet and the surface of the tool, with the risk of also damaging the punch and/or the die.

Another problem that occurs with prior art presses and tools is that of not being able to collect, and hence make use of, complete information regarding the actual use of the machine and of the tools.

In particular, it is not currently possible to collect historical data on some working parameters, such as the actual load applied to the tools during each bending cycle or the arrangement of the tools in the press during said machining cycles.

In fact, only very few machines are currently equipped with optical devices, which are costly, delicate and complicated to develop, capable of detecting and recording the position of the section of metal sheet to be bent with respect to the length of the cross beam. Therefore, in most cases it is not possible to know, in the various bending cycles carried out by a press and by a given tool, whether these have been placed in the correct or ideal position, i.e., more or less at the centre of the cross beam, or in a more critical and less suitable position, i.e. toward one or the ends thereof, thereby causing the press to work in an unbalanced manner.

This information is useful to evaluate the actual state of wear of the tools and their residual useful life, but also to evaluate whether any problems occurring prematurely in a tool or in the machine are due to improper use by the user.

WO 2016/037208 A1 describes a bending press configured to provide information and data about the bending process. The bending press comprises a tool holder for holding a tool, a control device and a sensor connected to the control device, wherein the sensor is a force or pressure sensor and cooperates with the tool holder and wherein the control device comprises a data processing device for determining characteristics of the workpiece and/or the deformation of the brake press from the sensor data of the force or pressure sensor.

Therefore, in the field there is the need to provide a system that allows distribution of the force/thrust exerted by the tools on the metal sheet to be detected and monitored.

In this context, the object of the present invention is to propose a tool for a press brake that allows the force applied to the metal sheet during bending to be detected.

In particular, the object of the present invention is to provide a tool that allows monitoring of these force values, at various points of the metal sheet, in order to detect anomalies both during set-up of the machine and during execution of the various bending cycles.

Another object of the present invention is to provide a tool that is not complicated to use with respect to prior art tools.

A further object of the invention is to provide a device to install on a press brake that allows monitoring of one or more of the aforesaid tools according to the present invention, in order to monitor distribution of the bending force along the whole of the bend line of a metal sheet to be bent and report any anomalies.

Yet another object of the present invention is to provide a device that allows recording of data relating to parameters of the bending process useful for the purpose of scheduled maintenance of the tools or of the machine.

These and other objects are achieved by a tool for a press brake of the type adapted to produce a bend line in a sheet material, where said tool comprises a body with at least one coupling portion adapted to allow it to be fixed to a movable or fixed part of a press brake.

In the context of the present invention, according to the embodiments, the term tool relates both to a working tool, i.e., with at least one working part that comes into contact with the sheet workpiece to be bent, such as a punch or a die, and another part involved in processing, such as a fixing or supporting device of said working tool, for example an "intermediate" or "clamping tool" for clamping a punch, or a blocking device of a die, or can also refer to the lower and upper tables of the machine.

According to the invention, said tool comprises at least one optical fibre, a section of which is fixed stably to an outer surface of the body of the tool, where in the aforesaid section the optical fibre includes at least one Bragg grating. The optical fibre is preferably glued to the surface of the tool, or fixed with equivalent means, so that any strains of the body, at said surface, are transmitted to the optical fibre.

By sending a light signal through the optical fibre and analysing the return signal reflected by the Bragg grating, it is possible to determine the state of strain of the body of the tool, in particular at the surface where said Bragg grating is positioned.

The degree of this strain is linked to the state of stress, and hence to the force exerted, and to the orientation of the optical fibre and to the position of the Bragg grating on the surface of the body.

Therefore, as the state of stress is correlated, and substantially proportional, to the force that the tool exerts on the metal sheet, by measuring the strain it is possible to reconstruct the trend, or profile, of the thrust both in several points of the same tool, and in different points of several tools, along the bend line.

For example, by equipping a press brake with an assembly of tools according to the present invention, mounted side by side along the bend line, it is possible to verify whether the thrust that each of them exerts on the metal sheet is more or less the same, and hence the press is working correctly, or whether thrust values outside the mean, either too high or too low, are detected for some of the tools.

According to a preferred variant of the invention, each of the ends of an optical fibre is provided with a connection element that allows several optical fibres of different tools, or of the same tool, to be connected in series, i.e., in a row, so that they are connectable to the same monitoring system, typically an interrogator device.

According to this variant, the optical fibre generally comprises two free end portions, i.e., not fixed to the body, which extend therefrom facilitating connection with other optical fibres or with the aforesaid monitoring system.

As a function of the size of the body in a direction parallel to the direction of bending (i.e. the width) and/or of the resolution of the monitoring/measuring points to be obtained, the fibre applied to a single tool can extend to a greater or lesser degree and can comprise more than one Bragg grating, for example two, three or more, aligned and spaced along the same section of optical fibre.

In this way, even if only one tool is used, it is possible to compare the measurements obtained in two or more points, by respective Bragg gratings, and detect, for example, whether or not said tool is working in a balanced manner, i.e. with a substantially constant thrust along its direction of extension.

According to a preferred embodiment of the invention, the optical fibre is arranged along a direction parallel to the bend line formed by the press on the metal sheet.

This direction of measurement, substantially orthogonal to the direction of the force that the tool imparts to the metal sheet, is particularly advantageous as it allows the fibre to work prevalently under tension so as to obtain a more efficient response and, consequently, also reduce any errors to a minimum.

In fact, the body of the tool is subject prevalently to compressive stress in the direction of the force applied, which causes a positive strain along the aforesaid direction parallel to the bending direction.

According to a preferred variant, a slot or groove is produced in the body of the tool, on the surface subject to measurement, in which at least one section of the optical fibre is housed. Typically, the slot extends between two end edges of the surface to which the optical fibre is applied, for example for the whole of the width of the tool, where arranged parallel to the bend line.

The main aim of said slot is to protect the optical fibre from impacts or shocks, or in any case from direct pressure, which would cause it to break. To this end, the depth of the slot is chosen so that the optical fibre is at least partially, and preferably entirely, below the aforesaid surface. In this way, the optical fibre is protected from impacts or shocks that can occur during normal operations to mount tools on and remove tools from the press or during bending operations.

In some cases, said slot can also facilitate positioning and mounting of the optical fibre as well as make its fixing more stable.

According to a possible embodiment of the invention, the tool to which the optical fibre is applied is a punch blocking device, known as "intermediate" or "clamping tool". The body of said intermediate tool comprises a coupling portion, generally in the form of a shank, adapted to be fixed to the movable cross beam of the press with known clamping means. The intermediate tool in turn comprises clamping means adapted to clamp and block one or more working tools, i.e., one or more punches. The shank generally extends from an upper abutment face, substantially transverse to the direction of movement of the cross beam and preferably substantially horizontal, which in general abuts against a corresponding surface of the cross beam or of its clamping means.

According to this variant, the optical fibre is fixed on said abutment face of the intermediate tool.

Advantageously, this position allows measurements of the strain of the body that are not influenced by the stresses that the blocking means of the working tool, typically of the type with shoes, impart to the body.

Moreover, this position is particularly suitable for protecting the optical fibre as, above all if the aforesaid slot is present, once the intermediate has been installed on the press, it remains substantially covered and inaccessible.

In addition to this, the optical fibre positioned on said face is in any case easy to inspect and can be removed and reinstalled practically and rapidly to carry out maintenance monitoring operations.

According to another variant of the invention, the optical fibre is fixed to a rear surface, i.e., to the rear side, of said intermediate tool. Preferably, said rear surface is oriented substantially vertically.

According to a preferred embodiment, said rear surface is comprised in the rear face of the fixed abutment element of the shoe means that block the punch.

Also in this embodiment, the optical fibre is preferably arranged along a direction parallel to the bend line formed by the press produces on the metal sheet, i.e. substantially orthogonal to the direction of the bending force.

In this case, the optical fibre remains completely accessible and visible, hence also inspectable, even when the blocking device (intermediate) is mounted on the press brake. However, at the same time the optical fibre is positioned in an area that is not directly involved in machining and is not affected by the action of the operators during operations to replace punches. Therefore, also in this position it is improbable that the fibre could be damaged following accidental impacts or shocks.

Said intermediate tool can have various sizes in width as a function of the type of press on which it is to be mounted and/or of the coupling type/standard.

According to another embodiment, the tool to which the fibre is applied is a working tool, preferably a punch. Also in this case, the body of the tool is provided with a coupling portion in the form of shank, adapted to be clamped in the clamping means of the intermediate tool, which extend from an abutment face.

Positioning of the optical fibre on the punch tool is thus substantially symmetrical to that described for the first variant of the tool of intermediate type. Also in this case, as a function of the width of the tool the optical fibre can be extended to a greater or lesser degree and comprise a plurality of Bragg gratings as a function of the desired resolution of the measurement points.

According to an aspect of the invention, the tool can comprise several optical fibres applied to the body. For example, two or more optical fibres can be placed side by side and close to one another (for example spaced by a few mm) on the same surface. With this solution it is possible to obtain a redundant system and the anomalies of one or more fibres can be detected by comparing the values measured.

Alternatively, two or more fibres can be positioned on different surfaces so as always to obtain significant and relevant readings even when the intermediate tool works with punch tools of very different form and that consequently generate different stresses in the body of the intermediate.

The present invention also concerns a device comprising one or more tools as described above and at least one monitoring device connected thereto.

As mentioned above, said tools can be blocking devices, i.e. intermediates or lower blocking devices of the die, working tools (punches or dies) or other working parts of the machine, even fixed, such as the lower table or the upper cross beam or ram.

With this device it is possible to monitor the force that said tools exert on a metal sheet to be bent and in particular compare the force applied at various points of the metal sheet to determine distribution of the load along the bend line.

According to the invention, the monitoring device is connected to one end of at least one optical fibre, generally the top or bottom end if there are more than one connected in series. Said monitoring device is configured to send a broadband light signal through said at least one fibre, to receive one or more signals reflected by one or more Bragg gratings comprised in the fibre and to analyse said one or more reflected signals to determine the state of strain of the body of the tool at the grating.

As mentioned above, as this strain varies in a manner substantially proportional to the load applied, by performing appropriate initial calibration it is possible to indirectly determine the actual load profile applied at the various measurement points.

In particular, within the scope of the present invention, an important aspect to obtain correct measurements is the initial calibration step of the "response" of the sensors with Bragg grating installed on the tools.

In detail, said calibration step can be performed with a trial bending operation conducted with a uniform rated load, so as to standardize the response of all the Bragg gratings, which might not provide the same response in terms of strain following the same load applied.

Firstly, the readings at various points of interest are compared with the expected ideal values, for example hypothesizing that the load is uniformly distributed along the whole of the bend line, all the Bragg gratings of the points involved should give a reading within a predetermined tolerance range. In this step it is possible both to proceed with a standardization of the values to uniform the response of the sensors and to minimize in this way the effects of reading errors, i.e. errors generated by the sensors.

After calibration has been performed, the system is ready to monitor the machinery in real time to verify the onset of any anomalies, excessive wear or other problems.

If anomalous values are detected, the device can signal the anomaly, for example via an alarm.

The device according to the present invention is simple and practical to use. In fact, besides the normal operations of mounting the tools on the machine, whether these are intermediates or other blocking devices, or working tools (punches or dies), it is sufficient to connect the various optical fibres to one another and at least one of them, generally positioned at one end of the assembly, to the monitoring system.

In the case in which the tool in question is an intermediate, the solution is even more practical as the operations to mount it on and remove it from the press are even less frequent with respect to those of punches and dies.

On the other hand, with the solution in which the fibre is mounted on the working tool it is possible to collect a series of operating parameters linked to the tool that can be used to evaluate the effective state of wear and optionally schedule replacement operations in advance. In particular, as well as the number or work cycles carried out, it is also possible to record the force values applied for each cycle and the way with which said loads were applied, i.e. balance or unbalanced.

Further features and advantages of the present invention will be more apparent from the description of a preferred, but not exclusive, example of embodiment of a die for a press brake, as illustrated in the accompanying figures, wherein:
- Fig. 1 is a front view of a tool mounted on a press brake, according to an embodiment of the present invention where said tool is an "intermediate" or "clamping tool".
- Fig. 2 is a sectional side view of the tool of Fig. 1;
- Fig. 3 is a schematic front view of a press brake equipped with a device according to the present invention comprising several tools of Fig.1;
- Fig. 4 is a front view of a tool mounted on a press brake, according to another embodiment of the present invention where said tool is an "intermediate" or "clamping tool".
- Fig.5 is a sectional side view of the tool of Fig. 4;
- Fig. 6 is a front view of a tool for a press brake according to another embodiment of the present invention where said tool is a punch.
- Fig.7 is a sectional side view of the tool of Fig. 6.

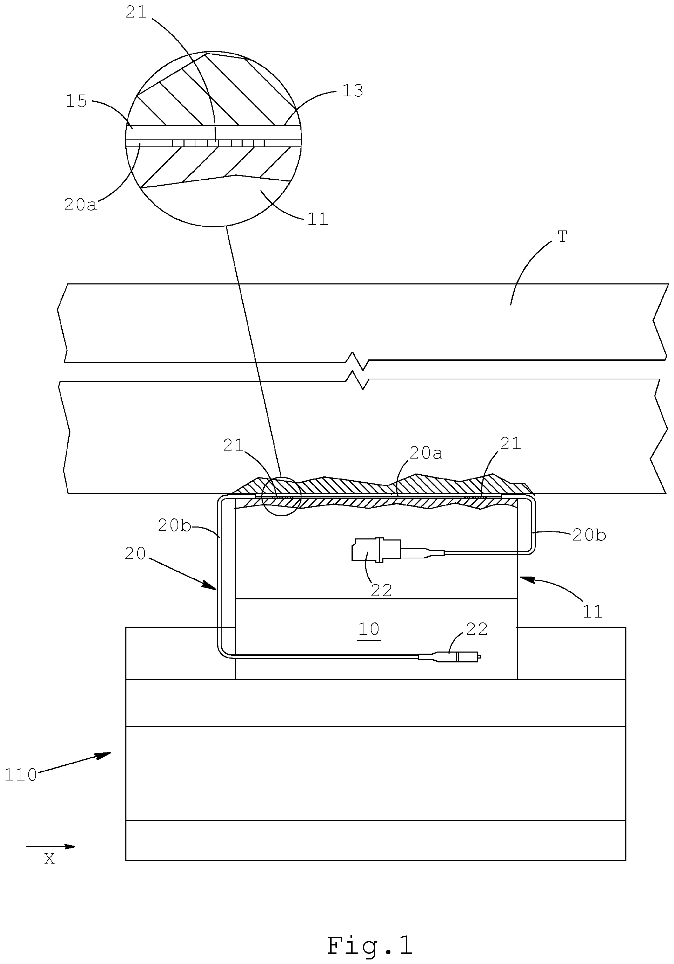

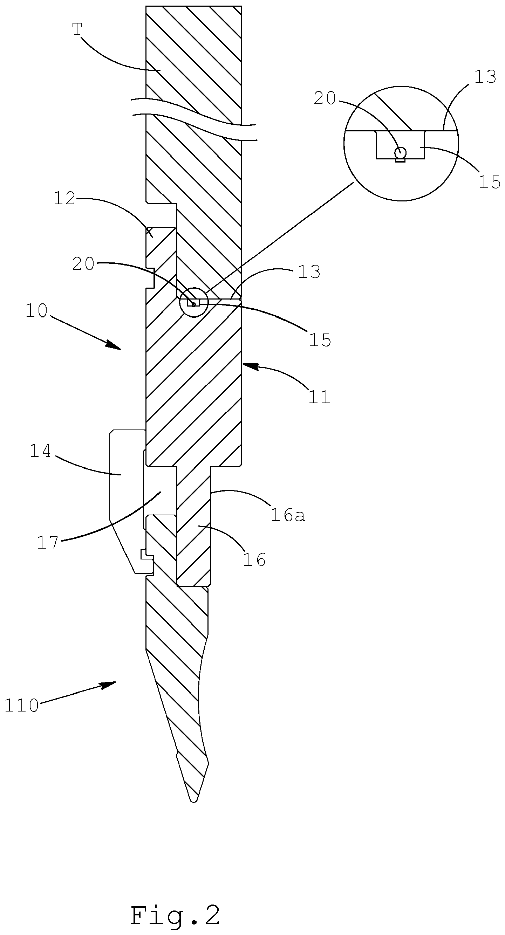

With reference to the accompanying Figs. 1 and 2, the number 10 indicates as a whole a tool 10 for a press brake configured as blocking device or "intermediate", adapted to allow a working tool 110 of punch type to be fixed to the press brake.

The intermediate 10 comprises a body 11 with a coupling portion 12 in the upper part, generally in the form of shank that extends from an abutment face 13. Said abutment face is generally adapted to abut against a respective surface of the cross beam or "ram" T of the press brake.

The intermediate 10 further comprises clamping means, typically of shoe type or the like, adapted to clamp a corresponding coupling portion of the punch 110.

In the example illustrated, said means comprise a shoe 14, or the like, which coacts with a fixed abutment element 16 of the body 11. A seat 17 is produced between said shoe 14 and said fixed abutment element 16, which can house the coupling portion 112 of the punch 110 to be blocked. Typically, said shoe 14 is subject to the action of operating or clamping means (not illustrated) that allow it to move reciprocally toward and away from the fixed abutment element 16 in order to clamp said coupling portion 112 of the punch 110.

Nonetheless, these clamping means can be various type and, being well known to those skilled in the art, will not be described in greater detail.

The width of the body 11, i.e. in the direction X of the bend line, can vary both as a function of the form/type of tool to be blocked and as a function of the type of press brake on which the intermediate must be mounted. In many cases the body 11 has a width of around 150-300 mm but, in some cases, it can have the same width as the cross beam of the press brake.

An optical fibre 20 comprising one or more Bragg gratings 21, two in the example in the figures, is applied stably to the body 11 of the intermediate 10, and more precisely to the abutment face 13. The optical fibre is constrained to the body 11 by means of gluing or equivalent systems, so that it is completely integral therewith.

According to a preferred variant of the invention illustrated in Figs. 1, 2 and 3, the optical fibre 20 is housed in a slot 15 produced on the abutment face 13 so as to be completely below the surface. Said slot 15 preferably extends for the whole of the length of the body 11.

According to the invention, the optical fibre 20 has a section 20a fixed to the body 11 of the intermediate tool 10 and two free end portions 20b, which extend from said body 11 and which are equipped with connectors 22 that allow the optical fibre to be connected to others or to a monitoring device, as better described below.

Said free end portions 20b are typically covered with a protective sheath, or buffer, while in the section 20a the optical fibre is in direct contact with the surface of the body of the tool.

According to a preferred variant, the protective sheath of the optical fibre 20 extends for a short section also inside the slot 15, generally from both ends. This allows the strains and curvatures of the optical fibre to be limited in the point of detachment/exit from the body of the tool.

An example of optical fibre provided with Bragg gratings suitable for use in the present application is the model SGC-01 manufactured by FBGS Technologies GmbH. Preferably, for an intermediate having a length ranging from 100 mm to 300 mm it is possible to use an optical fibre of this type provided with Bragg gratings in a number from 1 to 4. At least two Bragg gratings are preferable, both to have a comparison of at least two measurements in the same body, so as to be able to detect anomalies of the measurement system, and to evaluate possible unbalance of the intermediate, for example when using a tool of limited width blocked by only one intermediate.

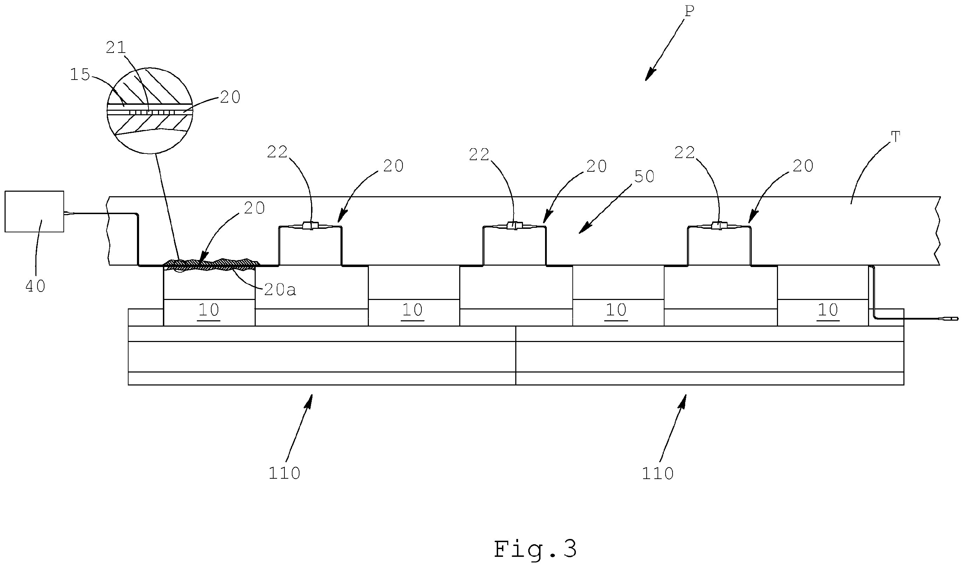

Fig. 3 schematically represents a part of a press brake P on which a device 50 according to the present invention is installed.

The press brake comprises an upper cross beam T, or ram, on which one or more intermediate tools 10 according to the invention are mounted. In turn, said intermediate tools 10 clamp punch tools 110. The various optical fibres 20 mounted on each intermediate tool 10 are connected to one another in series by means of the respective connectors 22.

One of the optical fibres 20 placed at the end of the series is connected to a monitoring system 40 comprising an interrogator device, optionally connected to and controllable by an information system, such as a computer, or a mobile electronic device, such as a tablet or smartphone.

Operation of the interrogator device is known to those skilled in the art and therefore will not be described in detail.

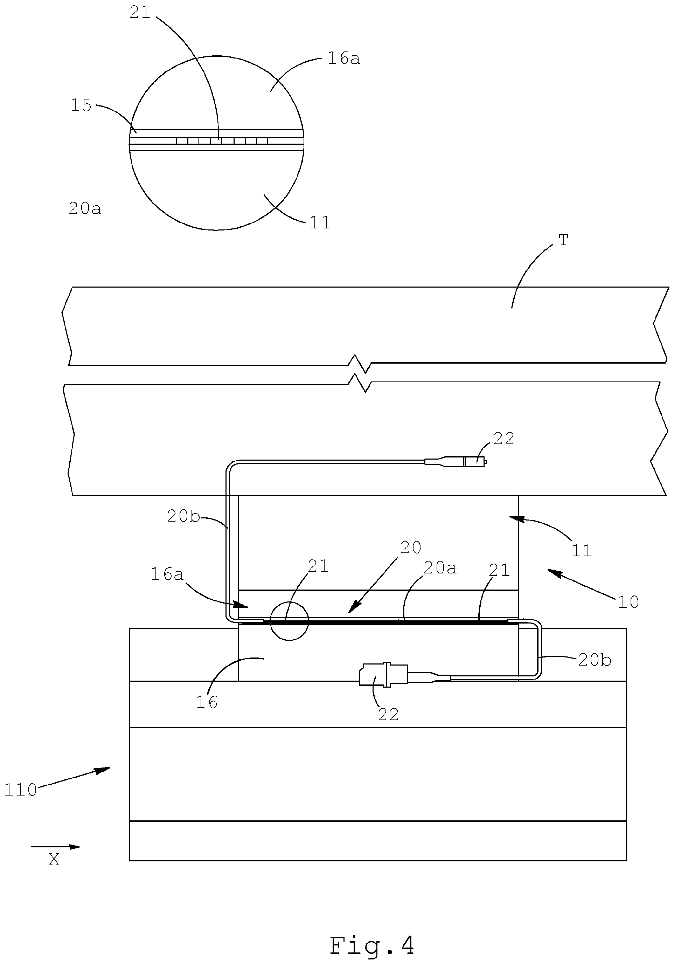

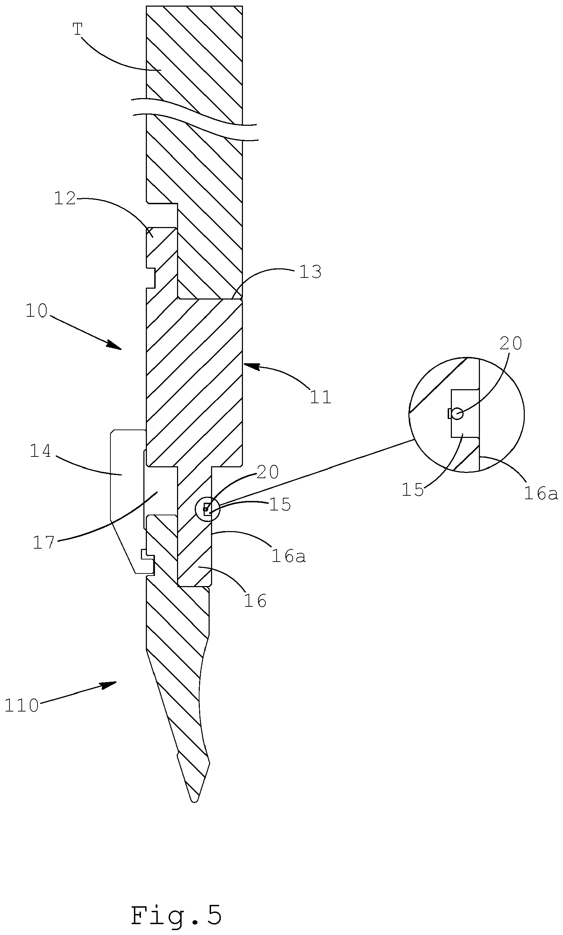

Figs. 4 and 5 illustrate another embodiment of the invention in which the optical fibre 20 is fixed to a surface placed on the rear side of the body 11 of the tool. More in detail, the optical fibre 20 is fixed to the rear surface 16a of the fixed abutment element 16 of the clamping means. Also in this case, the optical fibre is preferably housed in a slot 15 produced on said surface 16a.

The features of the optical fibre and its fixing are the same described for the previous variant.

According to a further variant, not illustrated, the tool can comprise at least a first optical fibre fixed to the abutment face 13 and at least a second optical fibre fixed to the rear surface 16a of the fixed abutment element 16.

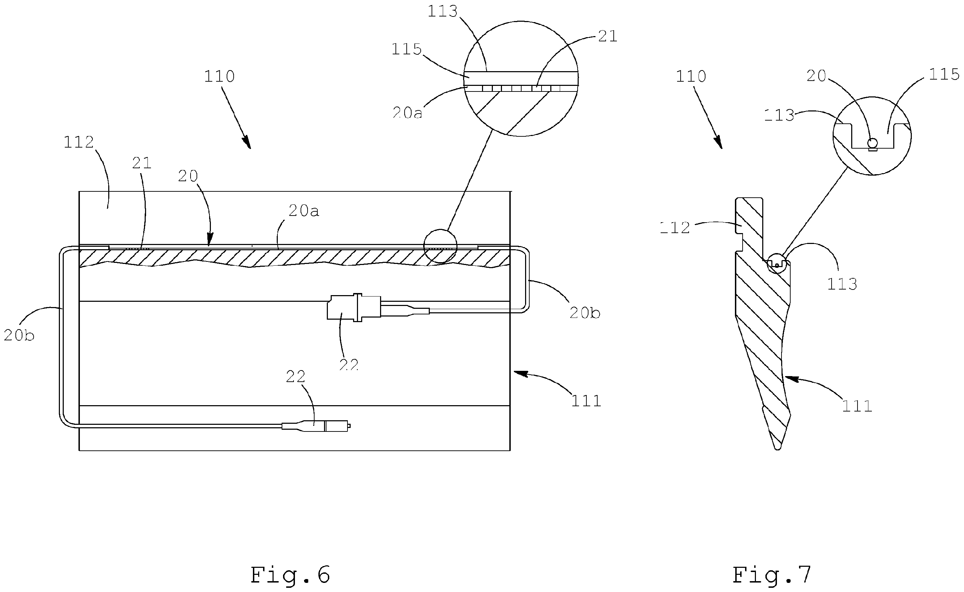

Figs. 5 and 6 illustrate another embodiment of the invention in which the tool that carries the optical fibre 20 is a working tool of punch type. Therefore, according to this variant, the optical fibre 20 is mounted directly on the body 111 of the punch.

Also in this case, the body 111 has a shank 112, which extends from an upper abutment face 113, which allows blocking of the punch 110 in the press brake. The arrangement of the optical fibre 20 on the body 111 of the punch is substantially symmetrical to the arrangement provided on the body 11 of the intermediate 10. In fact, said optical fibre 20 is preferably applied at the abutment face 113. Also in this case, the optical fibre 20 is preferably housed in a slot 115 produced on said abutment face 113. The advantages linked to this arrangement of the optical fibre 20 are the same as those already described for the previous variants.

According to the invention, it is possible to equip a press brake with a device 50 that includes one or more tools 10 of intermediate type or tools 110 of punch type, or both, which are equipped with optical fibres 20 that carry the Bragg gratings.

When both the intermediates 10 and the punches 110 carry the optical fibres 20, it is possible for all the aforesaid optical fibres 20 to be connected to one another in series and all connected to a single monitoring device, or for the two assemblies of tools, intermediates and punches, to be monitored independently.

The invention has been described purely for non-limiting illustrative purposes, according to some preferred embodiments. The person skilled in the art may find numerous other embodiments and variants, all falling within the scope of protection of the appended claims.

## Claims

1. A tool (10, 110) for a press brake, of the type adapted to produce a bend line in a sheet material, where said tool comprises a body (11, 111) connectable to a movable or fixed part of a press brake, **characterized by** comprising at least one optical fibre (20) a section (20a) of which is fixed stably to a surface (13, 16a, 113) of the body, and wherein in the aforesaid section (20a) said optical fibre includes at least one Bragg grating (21).

2. The tool according to claim 1, wherein the ends of the optical fibre are provided with connection elements (22) that allow several optical fibres (20) to be connected in series or the optical fibre (20) to be connected to a monitoring system (40).

3. The tool according to claim 2, wherein the optical fibre (20) comprises two free end portions (20b) that carry said connection elements (22).

4. The tool according to any one of the preceding claims, comprising two or more optical fibres (20) or one optical fibre (20) provided with two or more Bragg gratings (21) aligned with and spaced from one another.

5. The tool according to any one of the preceding claims, wherein said optical fibre (20) is arranged along a direction (X) parallel to the bend line.

6. The tool according to any one of the preceding claims, wherein a slot (15, 115) is produced on the surface (13, 16a, 113) of the body (11, 111), in which at least one section (20a) of the optical fibre is housed, the size of the slot being such that the optical fibre (20) is below said surface (13, 16a, 113).

7. The tool according to any one of the preceding claims, wherein the body (11, 111) comprises a coupling portion (12, 112), adapted to allow it to be fixed, directly or indirectly, to the press, which extends from an abutment face (13, 113) substantially transverse to the direction of movement of the cross beam and wherein said optical fibre (20) is applied to said abutment face (13).

8. The tool according to any one of the preceding claims, wherein the body (11, 111) comprises a coupling portion (12, 112), adapted to allow it to be fixed, directly or indirectly, to the press, which extends from an abutment face (13, 113) substantially transverse to the direction of movement of the cross beam and wherein said optical fibre (20) is applied to said abutment face (13).

9. The tool according to any one of the preceding claims, comprising a blocking device (10) of a working tool (110).

10. The tool according to any one of the preceding claims 1 to 8, comprising a working tool of punch (110) or die type.

11. The tool according to claim 9, wherein said optical fibre (20) is applied to a rear surface of the body (11) of the blocking device (10).

12. The tool according to claim 11, wherein the body (11) comprises a fixed abutment element (16) that coacts with a clamp (14), adapted to block the working tool (110), said optical fibre (20) being applied to the rear surface (16a) of said fixed abutment element (16).

13. A device (50) for monitoring distribution of the stress exerted by one or more tools (10, 110) of a press brake on a metal sheet to be bent, said device comprising at least one tool (10, 110) according to one of the preceding claims and a monitoring system (40), connected to at least one optical fibre (20) of said at least one tool, configured to:
- send a broadband light signal through said optical fibre (20);
- receive one or more signals reflected by one or more Bragg gratings (21) included in said optical fibre;
- analyse said one or more reflected signals to determine a state of strain of the body (10, 110) of the tool.

14. A press brake equipped with one or more tools (10, 110) according to any one of claims 1 to 12 or with a device (50) according to claim 13.

## Patentansprüche

1. Ein Werkzeug (10, 110) für eine Biegepresse des Typs, der geeignet ist, eine Biegelinie in einem Blattmaterial zu erzeugen, wobei besagtes Werkzeug einen Körper (11, 111) umfasst, der mit einem beweglichen oder festen Teil einer Biegepresse verbunden werden kann, **dadurch gekennzeichnet, dass** es mindestens eine optische Faser (20) umfasst, von der ein Abschnitt (20a) stabil an einer Oberfläche (13, 16a, 113) des Körpers befestigt ist, und wobei besagte optische Faser in dem besagten Abschnitt (20a) mindestens ein Bragg-Gitter (21) umfasst.

2. Das Werkzeug gemäß Anspruch 1, wobei die Enden der optischen Faser mit Verbindungselementen (22) versehen sind, die es ermöglichen, mehrere optische Fasern (20) in Reihe zu verbinden oder die optische Faser (20) an ein Überwachungssystem (40) anzuschließen.

3. Das Werkzeug gemäß Anspruch 2, wobei die optische Faser (20) zwei freie Endabschnitte (20b) umfasst, die die besagten Verbindungselemente (22) tragen.

4. Das Werkzeug gemäß einem jeden der vorhergehenden Ansprüche, umfassend zwei oder mehrere optische Fasern (20) oder eine optische Faser (20), die mit zwei oder mehreren Bragg-Gittern (21) versehen ist, die zueinander ausgerichtet und voneinander in Abständen angeordnet sind.

5. Das Werkzeug gemäß einem jeden der vorhergehenden Ansprüche, wobei besagte optische Faser (20) entlang einer Richtung (X) parallel zur Biegelinie angeordnet ist.

6. Das Werkzeug gemäß einem jeden der vorhergehenden Ansprüche, wobei auf der Oberfläche (13, 16a, 113) des Körpers (11, 111) ein Schlitz (15, 115) ausgebildet ist, in dem mindestens ein Abschnitt (20a) der optischen Faser untergebracht ist, wobei der Schlitz solcherart ist, dass sich die optische Faser (20) unterhalb der besagten Oberfläche (13, 16a, 113) befindet.

7. Das Werkzeug gemäß einem jeden der vorhergehenden Ansprüche, wobei der Körper (11, 111) einen Kopplungsabschnitt (12, 112) umfasst, geeignet zu ermöglichen, direkt oder indirekt an der Presse befestigt zu werden, das sich von einer Anschlagfläche (13, 113) aus im Wesentlichen quer zur Bewegungsrichtung des Querträgers erstreckt, und wobei die besagte optische Faser (20) an der besagten Anschlagfläche (13) angebracht ist.

8. Das Werkzeug gemäß den vorhergehenden Ansprüchen, wobei der Körper (11, 111) einen Kopplungsabschnitt (12, 112) umfasst, geeignet zu ermöglichen, direkt oder indirekt, an der Presse befestigt zu werden, das sich von einer Anschlagfläche (13, 113) aus erstreckt und wobei die besagte optische Faser (20) im Wesentlichen quer zur Bewegungsrichtung der besagten Querbalken-Anschlagfläche (13) angebracht ist.

9. Das Werkzeug gemäß einem jeden der vorhergehenden Ansprüche, umfassend eine Blockiervorrichtung (10) eines Arbeitswerkzeugs (110).

10. Das Werkzeug gemäß einem jeden der vorhergehenden Ansprüche 1 bis 8, umfassend ein Arbeitswerkzeug (110) des Typs zum Stanzen oder Prägen.

11. Das Werkzeug gemäß Anspruch 9, wobei besagte optische Faser (20) an einer hinteren Fläche des Körpers (11) der Blockiervorrichtung (10) angebracht ist.

12. Das Werkzeug gemäß Anspruch 11, wobei der Körper (11) ein festes Anschlagelement (16) umfasst, das mit einer Klemmvorrichtung (14) zusammenwirkt, geeignet, das Arbeitswerkzeug (110) zu blockieren, wobei die besagte optische Faser (20) an der hinteren Fläche (16a) des besagten festen Anschlagelements (16) angebracht ist.

13. Eine Vorrichtung (50) zum Überwachen der Verteilung des Drucks, der von einem oder mehreren Werkzeugen (10, 110) einer Biegepresse auf ein zu biegendes Metallblech ausgeübt wird, wobei besagte Vorrichtung mindestens ein Werkzeug (10, 110) gemäß einem der vorhergehenden Ansprüche und ein Überwachungssystem (40) umfasst, das mit mindestens einer optischen Faser (20) des besagten mindestens einen Werkzeugs verbunden ist und zu Folgendem konfiguriert ist;
- Senden eines breitbandigen Lichtsignals durch die besagte optische Faser (20);
- Empfangen eines oder mehrerer Signale, die von einem oder mehreren Bragg-Gittern (21) reflektiert werden, die in der besagten optischen Faser enthalten sind;
- Analysieren des besagten einen oder der mehreren reflektierten Signale, um einen Zustand der Belastung des Körpers (10, 110) des Werkzeugs zu bestimmen.

14. Eine Biegepresse, ausgestattet mit einem oder mehreren Werkzeugen (10, 110) gemäß einem jeden der Ansprüche 1 bis 12 oder mit einer Vorrichtung (50) gemäß Anspruch 13.

## Revendications

1. Outil (10, 110) pour une presse plieuse, du type adapté pour produire une ligne de pliage dans un matériau en feuille, où ledit outil comprend un corps (11, 111) pouvant être relié à une partie mobile ou fixe d'une presse plieuse, **caractérisé par le fait qu'**elle comprend au moins une fibre optique (20) dont une section (20a) est fixée de manière stable à une surface (13, 16a, 113) du corps, et où dans la section susmentionnée (20a) ladite fibre optique comprend au moins un réseau de Bragg (21).

2. Outil selon la revendication 1, où les extrémités de la fibre optique sont pourvues d'éléments de connexion (22) qui permettent de connecter plusieurs fibres optiques (20) en série ou de connecter la fibre optique (20) à un système de surveillance (40).

3. Outil selon la revendication 2, où la fibre optique (20) comprend deux parties d'extrémité libres (20b) qui portent lesdits éléments de connexion (22).

4. Outil selon l'une des revendications précédentes, comprenant deux ou plusieurs fibres optiques (20) ou une fibre optique (20) pourvue de deux ou plusieurs réseaux de Bragg (21) alignés et espacés l'un de l'autre.

5. Outil selon l'une des revendications précédentes, où ladite fibre optique (20) est disposée le long d'une direction (X) parallèle à la ligne de pliage.

6. Outil selon l'une des revendications précédentes, dans lequel une fente (15, 115) est réalisée sur la surface (13, 16a, 113) du corps (11, 111), dans laquelle est logée au moins une section (20a) de la fibre optique, la taille de la fente étant telle que la fibre optique (20) se trouve sous ladite surface (13, 16a, 113).

7. Outil selon l'une des revendications précédentes, où le corps (11, 111) comprend une partie de couplage (12, 112), adaptée pour permettre sa fixation, directe ou indirecte, à la presse, qui s'étend à partir d'une face de butée (13, 113) sensiblement transversale à la direction de déplacement du faisceau transversal, et où ladite fibre optique (20) est appliquée sur ladite face de butée (13).

8. Outil selon l'une des revendications précédentes, où le corps (11, 111) comprend une partie de couplage (12, 112), adaptée pour permettre sa fixation, directe ou indirecte, à la presse, qui s'étend à partir d'une face de butée (13, 113) sensiblement transversale à la direction de déplacement du faisceau transversal, et où ladite fibre optique (20) est appliquée sur ladite face de butée (13).

9. Outil selon l'une des revendications précédentes, comprenant un dispositif de blocage (10) d'un outil de travail (110).

10. Outil selon l'une des revendications précédentes 1 à 8, comprenant un outil de travail de type poinçon (110) ou matrice.

11. Outil selon la revendication 9, où ladite fibre optique (20) est appliquée sur une surface arrière du corps (11) du dispositif de blocage (10).

12. Outil selon la revendication 11, où le corps (11) comprend un élément de butée fixe (16) qui coopère avec une pince (14), adaptée pour bloquer l'outil de travail (110), ladite fibre optique (20) étant appliquée sur la surface arrière (16a) dudit élément de butée fixe (16).

13. Dispositif (50) de contrôle de la répartition de la contrainte exercée par un ou plusieurs outils (10, 110) d'une presse plieuse sur une tôle à plier, ledit dispositif comprenant au moins un outil (10, 110) selon l'une des revendications précédentes et un système de contrôle (40), relié à au moins une fibre optique (20) dudit outil au minimum, configuré pour :
- envoyer un signal lumineux à large bande à travers ladite fibre optique (20) ; recevoir un ou plusieurs signaux réfléchis par un ou plusieurs réseaux de Bragg (21) inclus dans ladite fibre optique ;
- analyser lesdits un ou plusieurs signaux réfléchis pour déterminer un état de déformation du corps (10, 110) de l'outil.

14. Presse plieuse équipée d'un ou plusieurs outils (10, 110) selon l'une des revendications 1 à 12 ou d'un dispositif (50) selon la revendication 13.
